# EUROPEAN PATENT SPECIFICATION

(11) **EP 2 392 792 B1**
(45) Date of publication and mention of the grant of the patent: **14.10.2015**
(21) Application number: 11168247.2
(22) Date of filing: 31.05.2011
(51) Int. Cl.: F01N 3/025, F01N 9/00, F01N 11/00, B01D 46/00, B01D 46/44

(54) **Diagnostic apparatus and diagnostic method for particulate filter**
Diagnosevorrichtung und Diagnoseverfahren für einen Partikelfilter
Appareil de diagnostic et procédé de diagnostic pour filtre à particules

(30) Priority: 01.06.2010 JP 2010126024
(43) Date of publication of application: 07.12.2011
(73) Proprietor: TOYOTA JIDOSHA KABUSHIKI KAISHA, Toyota-shi, Aichi-ken, 471-8571 (JP)
(72) Inventor: Uchida, Takahiro, Toyota-shi, Aichi-ken, 471-8571 (JP); Morikawa, Atsushi, Toyota-shi, Aichi-ken, 471-8571 (JP)
(74) Representative: Kuhnen & Wacker

(56) References cited:
- EP-A1- 1 602 806
- EP-A1- 1 849 972
- EP-A1- 2 037 090
- WO-A1-2009/101667
- FR-A1- 2 795 132
- FR-A1- 2 799 504
- JP-A- 2002 227 634

## Description

### BACKGROUND OF THE INVENTION

### 1. Field of the Invention

The invention relates to a diagnostic apparatus and a diagnostic method for a particulate filter provided in an exhaust passage for an internal combustion engine.

### 2. Description of the Related Art

A particulate filter (will hereinafter be simply referred to as "filter" where necessary) for trapping particulate matter (will hereinafter be referred to as "PM" where necessary) contained in exhaust gas may be provided in an exhaust passage for an internal combustion engine. When such a filter is provided in an exhaust passage, a differential pressure sensor for detecting the differential pressure across the filter (i.e., the difference between the exhaust gas pressure at a position immediately upstream of the filter and the exhaust gas pressure at a position immediately downstream of the filter) may be provided in the exhaust passage.

Japanese Patent Application Publication No. 2009-103043 describes a technique of detecting an abnormality of a filter based on the differential pressure across the filter, which is detected by a differential pressure sensor. According to this technique described in Japanese Patent Application Publication No. 2009-103043, the filter is determined to be in an abnormal condition if the differential pressure across the filter is equal to or lower than a predetermined threshold when the amount of PM accumulated in the filter, which is estimated based on the operation state of the internal combustion engine, becomes equal to or larger than a determination value. Note that the determination value is a threshold used for executing a recovery process that removes the PM accumulated in the filter by increasing the temperature of the filter.

In a case where a filter is provided in an exhaust passage for an, internal combustion engine, a forced recovery process is executed which oxidizes and thereby removes the PM accumulated in the filter by forcibly increasing the temperature of the filter. PM gradually accumulates in the filter during the period from when the forced recovery process is completed to when the subsequent forced recovery process is started (will hereinafter be referred to as "forced recovery process non-execution period" where necessary).

If the filter has been broken by being damaged, melted, or the like, the flowrate of the exhaust gas flowing through the filter increases. Therefore, the differential pressure across the filter is lower than normal. Thus, for example, the amount of PM accumulated during the forced recovery process non-execution period is estimated based on the operation state of the internal combustion engine, and whether the filter is in a normal condition or in an abnormal condition is determined based on the estimated value of the PM accumulated amount and the differential pressure across the filter. In this case, the filter is determined to be in an abnormal condition if the value of the differential pressure across the filter that is obtained at the time when the estimated value of the PM accumulated amount reaches a predetermined value is smaller than the differential pressure value corresponding to the predetermined value.

However, even in the forced recovery process non-execution period, so-called continuous recovery may occur, that is, the PM accumulated in the filter may be oxidized due to an increase in the exhaust gas temperature. Thus, in a case where the amount of PM accumulated in the filter needs to be accurately estimated based on the operation state of the internal combustion engine, it is necessary to take into account the decrease in the PM accumulated amount that may be caused by continuous recovery. For this reason, it is difficult to estimate the PM accumulated amount with high accuracy.

JP 2002 227634 A discloses a diagnostic apparatus that diagnoses a condition of a particulate filter provided in an exhaust passage for an internal combustion engine. A forced recovery process is carried out by forcibly increasing a temperature of the particulate filter.

### SUMMARY OF THE INVENTION

The invention provides a technology for more appropriately determining whether a filter is in a normal condition or in an abnormal condition.

A first aspect of the invention relates to a diagnostic apparatus that diagnoses a condition of a particulate filter provided in an exhaust passage for an internal combustion engine, including: a differential pressure sensor that detects a differential pressure across the particulate filter; an execution portion that executes a forced recovery process that oxidizes and thereby removes particulate matter accumulated in the particulate filter by forcibly increasing a temperature of the particulate filter; and a first diagnostic portion that determines that the particulate filter is in a normal condition if there is a period where a value detected by the differential pressure sensor is on an increase, within a period where the forced recovery process by the execution portion is unexecuted.

If a filter has been damaged or melted to a large extent, it may be difficult to trap PM in exhaust gas using the filter. If a filter has been broken to such a degree that trapping PM is difficult (such a condition of a filter will hereinafter be expressed as "completely broken"), the differential pressure across the filter hardly changes during the period where the forced recovery process is unexecuted, that is, the value detected by the differential pressure sensor remains equal to the value at the end of the immediately preceding forced recovery process during the same period.

According to the first aspect of the invention, therefore, the first diagnostic portion determines that the filter is not completely broken and thus determines that the filter is in a normal condition if there is the period where the value detected by the differential pressure sensor is on the increase (will hereinafter be referred to as "differential pressure increase period" where necessary), within the period where the forced recovery process is unexecuted.

According to the first aspect of the invention, thus, it is possible to minimize the possibility that the filter is erroneously determined to be in an abnormal condition despite the fact that the filter is actually in a normal condition.

The diagnostic apparatus described above may further include an increase rate calculation portion, a reference increase rate calculation portion, and a second diagnostic portion. The increase rate calculation portion calculates, if there is the differential pressure increase period within the period where the forced recovery process by the execution portion is unexecuted, a rate at which the value detected by the differential pressure sensor increases during the differential pressure increase period. The rate of increase in the value detected by the differential pressure sensor may be a value representing the ratio of the amount by which the value detected by the differential pressure sensor increases during the differential pressure increase period to the amount by which the estimated value of the PM accumulated amount increases during the same differential pressure increase period, or may be a value representing the amount of increase in the value detected by the differential pressure sensor per unit time during the differential pressure increase period. The reference increase rate calculation portion calculates a reference increase rate if there is the differential pressure increase period within the period where the forced recovery process by the execution portion is unexecuted. The reference increase rate is a rate at which the value detected by the differential pressure sensor is estimated to increase during the differential pressure increase period on the assumption that the filter is in a normal condition.

The second diagnostic portion may determine that the filter is in an abnormal condition if the rate of increase in the value detected by the differential pressure sensor, which has been calculated by the increase rate calculation portion, is not within a predetermined allowable range from the reference increase rate that has been calculated by the reference increase rate calculation portion. In this way, it is possible to more reliably minimize the possibility that the filter is erroneously determined to be in a normal condition despite the fact that the filter is actually in an abnormal condition.

The diagnostic apparatus described above may further include an intake air amount obtaining portion, a determination portion, a calculation portion, and a third diagnostic portion. The intake air amount obtaining portion obtains the amount of intake air drawn into the internal combustion engine. The determination portion determines whether a condition where a continuous recovery occurs is satisfied during the period where the forced recovery process is unexecuted. When the forced recovery process is unexecuted and the condition where the continuous recovery occurs is not satisfied, the calculation portion calculates a differential pressure gradient if there is a period where the intake air amount of the internal-combustion engine is on the increase (will hereafter be referred to as "intake air amount increase period" where necessary). The differential pressure gradient represents the ratio of the amount by which the value detected by the differential pressure sensor increases during the intake air amount increase period to the amount by which the intake air amount increases during the same intake air amount increase period.

As the intake air amount of the internal combustion engine increases, the exhaust gas flowrate increases, and therefore the differential pressure across the filter increases if the filter is in a normal condition. On the other hand, in a case where the ' filter is completely broken, the differential pressure across the filter hardly changes even when the exhaust gas flowrate increases. Even if the differential pressure across the filter increases as the exhaust gas flowrate increases, the amount of increase in the differential pressure across the filter is much smaller than that when the filter is in a normal condition. Therefore, the third diagnostic portion determines that the filter is in an abnormal condition if the differential pressure gradient calculated by the calculation portion is equal to or smaller than a predetermined value. The predetermined value may be a threshold that is set such that it is determined that the filter is completely broken when the differential pressure gradient calculated by the calculation portion is equal to or smaller then the threshold.

With the diagnostic apparatus described above, it is possible to more reliably determine that the filter is in an abnormal condition when it is completely broken.

A second aspect of the invention relates to a diagnostic method for diagnosing a condition of a particulate filter provided in an exhaust passage for an internal combustion engine, including: detecting a differential pressure across the particulate filter; executing a forced recovery process that oxidizes and thereby removes particulate matter accumulated in the particulate filter by forcibly increasing a temperature of the particulate filter; and determining that the particulate filter is in a normal condition if there is a period where the detected differential pressure across the particulate filter is on the increase, within a period where the forced recovery process is unexecuted.

According to the invention, it is possible to more appropriately determine whether the filter is in a normal condition or in an abnormal condition.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG 1 is a view schematically showing the structures of intake and exhaust systems of an internal combustion engine according to a first example embodiment;
FIG 2 is a graph illustrating the relation between the estimated value of the amount of PM accumulated in the filter and the ratio of the differential pressure across the filter to the intake air amount of the internal combustion engine, is the relation used in the first example embodiment;
FIG 3 is a flowchart illustrating a diagnostic method for a filter according to the first example embodiment;
FIG 4 is a flowchart illustrating a diagnostic method for a filter according to a modification example of the first example embodiment;
FIG 5 is a graph illustrating the relation between the intake air amount of the internal combustion engine and the differential pressure across the filter, which is established in a state where the forced recovery process is unexecuted and continuous recovery is not occurring, is the relation used in a second example embodiment; and
FIG. 6 is a flowchart illustrating a second diagnostic method for a filter according to the second example embodiment.

### DETAILED DESCRIPTION OF EMBODIMENTS

Hereinafter, example embodiments of the invention will be described with reference to the drawings. It is to be noted that the dimensions, material, shape, relative position, and so on, of each of the structural parts and portions that are described in this section of the specification do not limit the technical scope of the invention unless specified otherwise.

### <First Example Embodiment>

In a first example embodiment, the invention is applied to diagnosis of the condition of a filter provided in an exhaust passage for a diesel engine for driving a vehicle. It is to be noted that the invention may be applied to various internal combustion engines other than diesel engines, such as gasoline engines.

### (Outline of Structures of Intake and Exhaust Systems of Internal Combustion Engine)

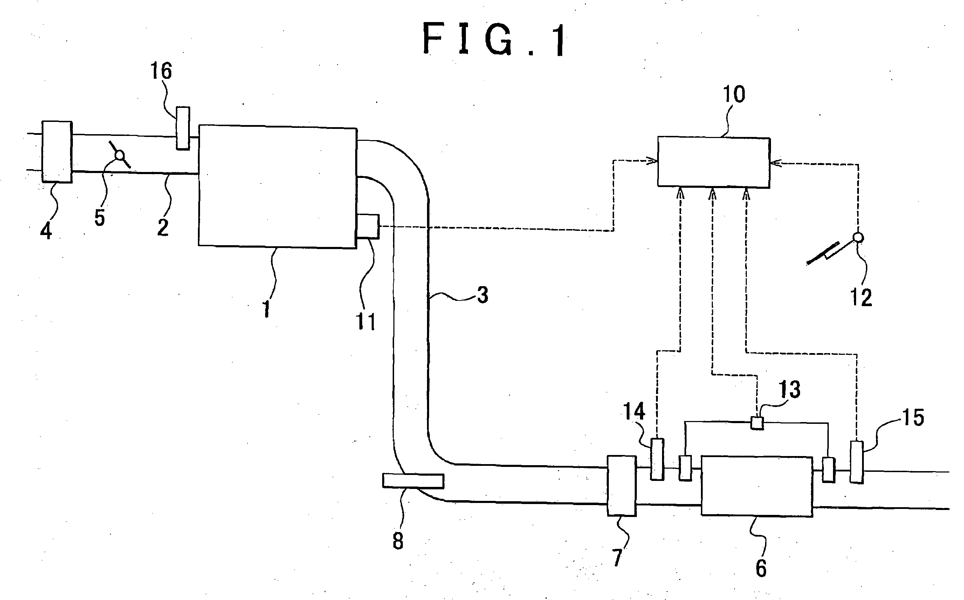

FIG 1 is a view schematically showing the structures of intake and exhaust systems of an internal combustion engine 1 according to the first example embodiment. The internal combustion engine 1 is a diesel engine for driving a vehicle. An intake passage 2 and an exhaust passage 3 are connected to the internal combustion engine 1.

An airflow meter 4, a throttle valve 5, and an intake air temperature sensor 16 are provided at the intake passage 2. The airflow meter 4 detects the amount of intake air drawn into the internal combustion engine 1. The throttle valve 5 adjusts the flowrate of the intake air flowing through the intake passage 2 by changing the flow passage area of the intake passage 2. The intake air temperature sensor 16 detects the temperature of the intake air flowing into the internal combustion engine 1.

A filter 6 that traps PM in exhaust gas is provided in the exhaust passage 3. An oxidation catalyst 7, which is an upstream catalyst, is provided upstream of the filter 6 in the exhaust passage 3. It is to be noted that the upstream catalyst is not limited to an oxidation catalyst, that is, any catalyst having an oxidative function, such as a NOx storage reduction catalyst, may be used as the upstream catalyst. A fuel supply valve 8 for supplying fuel into exhaust gas is provided upstream of the oxidation catalyst 7 in the exhaust passage 3.

Further, a differential pressure sensor 13 for detecting the differential pressure across the filter 6 is provided in the exhaust passage 3. Further, in the exhaust passage 3, an upstream exhaust gas temperature sensor 14 is provided between the oxidation catalyst 7 and the filter 6, and a downstream exhaust gas temperature sensor 15 is provided downstream of the filter 6. The upstream exhaust gas temperature sensor 14 and the downstream exhaust gas temperature sensor 15 each detect the temperature of the exhaust gas flowing through the exhaust passage 3.

The internal combustion engine 1 is provided with an electronic control unit (ECU) 10 for controlling the internal combustion engine 1. The ECU 10 is electrically connected to the airflow meter 4, the intake air temperature sensor 16, the differential pressure sensor 13, the upstream exhaust gas temperature sensor 14, and the downstream exhaust gas temperature sensor 15. Further, the ECU 10 is electrically connected to a crank position sensor 11 provided at the internal combustion engine 1 and an accelerator operation amount sensor 12 provided in a vehicle in which the internal combustion engine 1 is mounted. Their output signals are input into the ECU 10. The ECU 10 determines the speed of the internal combustion engine 1 based on the output signals from the crank position sensor 11. The ECU 10 determines the load on the internal combustion engine 1 based on the output signals from the accelerator operation amount sensor 12.

Further, the ECU 10 is electrically connected to the throttle valve 5 and the fuel supply valve 8. The operations of these devices are controlled by the ECU 10.

### (Filter Recovery)

PM in exhaust gas is trapped by the filter 6 and gradually accumulates therein. In the first example embodiment, a forced recovery process for removing the PM accumulated in the filter 6 is executed. In the first example embodiment, the force recovery process is executed by supplying fuel into exhaust gas from the fuel supply valve 8.

The fuel supplied into exhaust gas from the fuel supply valve 8 is then supplied to the oxidation catalyst 7. The fuel supplied to the oxidation catalyst 7 is oxidized by the oxidation catalyst 7, thus generating oxidation heat. Due to the oxidation heat, the temperature of the exhaust gas flowing into the filter 6 increases, thus increasing the temperature of the filter 6. As a result, the PM accumulated in the filter 6 is oxidized and thus removed.

In the forced recovery process, the temperature of the filter 6 is controlled to a given temperature by adjusting the amount of fuel supplied from the fuel-supply valve 8. This temperature is a temperature at which PM is oxidized while damage and melting of the filter 6 is suppressed, and it is, for example, empirically determined in advance. The temperature of the filter 6 is estimated based on the value detected by the downstream exhaust gas temperature sensor 15.

In the first example embodiment, further, the amount of PM accumulated in the filter 6 is estimated based on the operation state of the internal combustion engine 1. More specifically, the amount of PM in exhaust gas is estimated based on the operation state of the internal combustion engine 1, and the amount of PM accumulated in the filter 6 is estimated by adding up the estimated amount of PM in exhaust gas. The forced recovery process is executed again when the estimated PM accumulated amount becomes equal to or larger than a predetermined accumulated amount, which is a threshold for starting the forced recovery process, after the end of the immediately preceding forced recovery process. It is to be noted that the predetermined accumulated amount is, for example, empirically determined in advance such that the degree to which the operation state of the internal combustion engine 1 is affected by the exhaust gas pressure on the upstream side of the filter 6, which increases due to an increase in the PM accumulated amount, falls within an allowable range.

It is to be noted that, in the first example embodiment, the ECU 10 serves as "execution portion" by executing the forced recovery process described above. Further, it is to be noted that, in the forced recovery process, fuel may be supplied to the oxidation catalyst 7 by performing post-fuel injection after the main fuel injection in the internal combustion engine 1, instead of supplying fuel from the fuel supply valve 8. Further, the forced recovery process may be executed also by heating the filter 6 using an electric heater, for example.

Further, even when the forced recovery process is unexecuted, if the temperature of the exhaust gas discharged from the internal combustion engine 1 increases and thus the temperature of the exhaust gas flowing into the filter 6 increases up to a temperature at which PM is oxidized, continuous recovery occurs at the filter 6. As a result, the amount of PM accumulated in the filter 6 decreases:

### (Change in Differential Pressure across Filter)

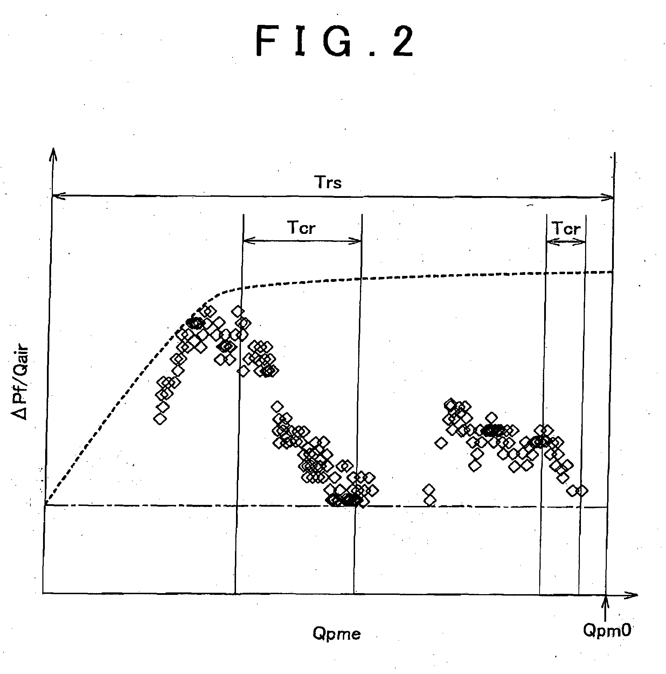

Hereinafter, how the differential pressure across the filter 6 changes during a period where the forced recovery process is unexecuted (will hereinafter be referred to as "forced recovery process non-execution period") will be described with reference to FIG. 2. FIG. 2 is a graph illustrating the relation between an estimated value Qpme of the amount of PM accumulated in the filter 6 and a ratio ΔPf/Qair of a differential pressure ΔPf across the filter 6 to an intake air amount Qair that is the amount of intake air drawn into the internal combustion engine 1 (i.e., the level of the differential pressure across the filter 6 per unit amount of intake air). In FIG. 2, the abscissa axis represents the estimated value Qpme of the amount of PM accumulated during the period from the end of the forced recovery process to the start of the subsequent forced recovery process. This estimated value is calculated based on the operation state of the internal combustion engine 1 as mentioned above. Note that "Qpm0" on the abscissa axis of FIG. 2 represents a predetermined accumulated amount that is a threshold for starting the forced recovery process. On the other hand, the ordinate axis of FIG 2 represents the ratio ΔPf/Qair of the differential pressure ΔPf across the filter 6 to the intake air amount Qair of the internal combustion engine 1.

In FIG 2, "Trs" represents the forced recovery non-execution period, and "Tcr" represents the period where continuous recovery is occurring. Further, in FIG 2, the broken line represents the change in ΔPf/Qair that is found in a case where continuous recovery does not occur in the forced recovery process non-execution period Trs, and the chain line represents the change in ΔPf/Qair that is found in a case where continuous recovery keeps occurring over the entirety of they forced recovery process non-execution period Trs.

The estimated value Qpme of the amount of PM accumulated in the filter 6 gradually increases during the forced recovery process non-execution period Trs. As the amount of PM accumulated in the filter 6 increases, the differential pressure ΔPf across the filter 6 increases. Therefore, in a case where continuous recovery does not occur in the forced recovery process non-execution period Trs, that is, in a case where the change in the actual PM accumulated amount coincides with the change in the estimated value Qpme, the value of ΔPf/Qair increases as the estimated value Qpme of the PM accumulated amount increases, as indicated by the broken line in FIG. 2.

However, if continuous recovery occurs in the forced recovery process non-execution period Trs, the actual PM accumulated amount decreases during the continuous recovery. For this reason, referring to FIG. 2, the value of ΔPf/Qair decreases during the period Tcr even though the estimated value Qpme of the PM accumulated amount increases. Further, in a case where continuous recovery keeps occurring over the entirety of the forced recovery process non-execution period Trs, the actual amount of PM accumulated in the filter 6 hardly increases. Therefore, as indicated by the chain line in FIG 2, the value of ΔPf/Qair remains equal to the value at the end of the immediately preceding forced recovery process, even though the estimated value Qpme of the PM accumulated amount increases.

### (Filter Condition Diagnosis)

In a case where the filter 6 has been broken by being damaged, melted, or the like, the differential pressure across the filter 6 is lower than normal. However, even when the filter 6 is in a normal condition, a difference may be caused between the estimated PM accumulated amount and the actual PM accumulated amount if continuous recovery occurs in the forced recovery process non-execution period. For this reason, the differential pressure across the filter 6, which is detected by the differential pressure sensor 13, may take different values with respect to a certain estimated value of the PM accumulated amount. Therefore, it is difficult to highly accurately determine whether the filter 6 is in a normal condition or an abnormal condition, based on the relation between the estimated value of the amount of PM accumulated during the forced recovery process non-execution period and the value detected by the differential pressure sensor 13.

If the filter 6 is completely broken by being, for example, damaged or melted to a large extent, the differential pressure across the filter 6 hardly changes during the forced recovery process non-execution period. More specifically, during the forced recovery process non-execution period, the value detected by the differential pressure sensor 13 remains equal to the value at the end of the immediately preceding forced recovery process. As such, if there is a period where the value detected by the differential pressure sensor 13 is on the increase (will hereinafter be referred to as "differential pressure increase period" where necessary), within the forced recovery process non-execution period, it is determined that the filter 6 is not completely broken.

Thus, in the first example embodiment, the filter 6 is determined to be in a normal condition if there is the differential pressure increase period within the forced recovery process non-execution period, regardless of the estimated value of the PM accumulated amount. In this way, it is possible to minimize the possibility that the filter 6 is erroneously determined to be in an abnormal condition despite the fact that the filter is actually in a normal condition.

### (Filter Condition Diagnostic Procedure)

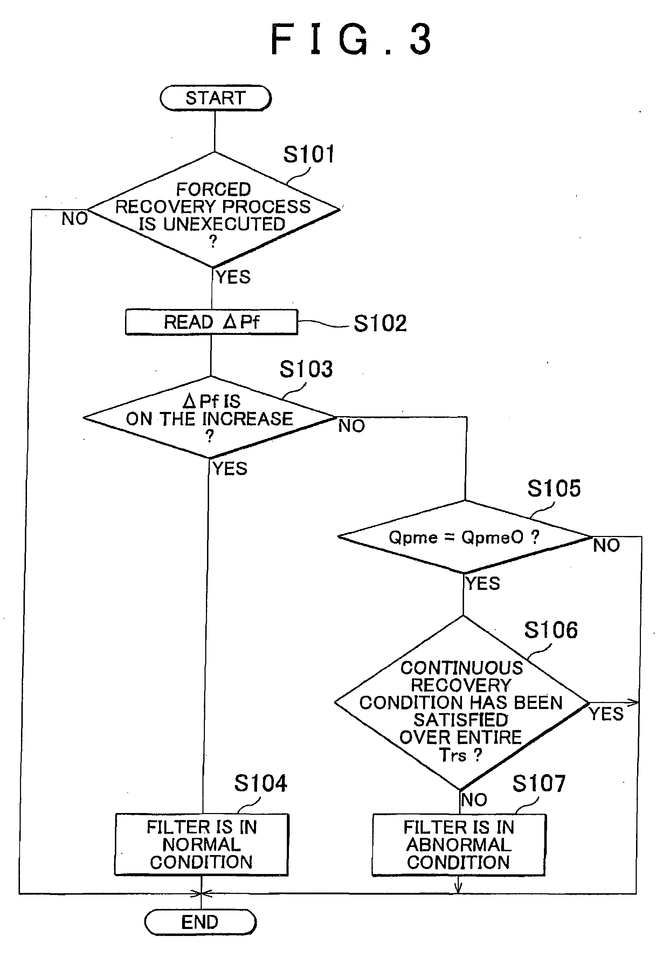

Hereinafter, the procedure of the filter condition diagnosis according to the first example embodiment will be described with reference to the flowchart of FIG. 3. This filter condition diagnostic procedure is stored in the ECU 10 in advance, and repeatedly executed by the ECU 10 at given intervals.

In the filter condition diagnostic procedure, first, whether the forced recovery process is presently unexecuted is determined in step S101. If it is determined in step S101 that the forced recovery process is presently unexecuted, the value ΔPf detected by the differential pressure sensor 13 is read in step S102.

Subsequently, whether the value ΔPf detected by the differential pressure sensor 13 is on the increase is determined in step S103. In this step, more specifically, the value detected by the differential pressure sensor 13 that was read a predetermined period of time ago is subtracted from the value detected by the differential pressure sensor 13 that has been read in the present cycle, and if the result of the subtraction is a positive value, it is determined that the value ΔPf detected by the differential pressure sensor 13 is on the increase.

If the result of the determination in step S103 is positive ("YES"), the filter 6 is determined to be in a normal condition in step S104. On the other hand, if the result of the determination in step S103 is negative ("NO"), it is determined in step S105 whether the estimated value Qpme of the amount of PM accumulated in the filter 6 has reached the predetermined accumulated amount Qpm0, that is, whether the forced recovery process non-execution period Trs in the present cycle has come to an end. It is to be noted that the estimated value Qpme of the amount of PM accumulated in the filter 6 is calculated in a procedure that is executed separately from this filter condition diagnostic procedure.

If the result of the determination in step S105 is negative ("NO"), the filter condition diagnostic procedure is finished briefly, and then the processes in steps S101 to S103 are executed again. On the other hand, if the result of the determination in step S105 is positive ("YES"), it is determined that the forced recovery process non-execution period Trs in the present cycle has come to an end without generating a period where the value detected by the differential pressure sensor 13 is on the increase. Then, the process in step S 106 is executed.

In step S 106, it is determined whether a continuous recovery condition that is a condition where continuous recovery occurs has been satisfied over the entirety of the forced recovery process non-execution period Trs in the present cycle. Whether the continuous recovery condition is satisfied within the forced recovery process non-execution period Trs is determined based on the temperature and flowrate of the exhaust gas that flows into the filter 6 during the forced recovery process non-execution period Trs. The temperature of the exhaust gas flowing into the filter 6 is detected by the upstream exhaust gas temperature sensor 14, and the flowrate of the exhaust gas flowing into the filter 6 is calculated based on the intake air amount detected by the airflow meter 4.

In a case where continuous recovery keeps occurring over the entirety of the forced recovery process non-execution period Trs, even if the filter 6 is in a normal condition, the value detected by the differential pressure sensor 13 remains constant over the entirety of the forced recovery process non-execution period Trs, as indicated by the chain line in FIG 2. That is, in this case, even if the filter 6 is in a normal condition, there is no period where the value detected by the differential pressure sensor 13 is on the increase. Therefore, if the result of the determination in step S106 is positive ("YES"), the filter 6 is not determined to be in an abnormal condition. For this reason, in this case, the filter condition diagnostic procedure is finished briefly.

On the other hand, in a case where the filter 6 is in a normal condition, if continuous recovery does not occur in at least a part of the forced recovery process non-execution period Trs, PM accumulates in the filter 6 during this part of the forced recovery process non-execution period Trs, and therefore the differential pressure across the filter 6 increases. That is, there is a period where the value ΔPf detected by the differential pressure sensor 13 is on the increase.

As such, if the result of the determination in step S 106 is negative ("NO"), it is determined that the filter 6 has been completely broken. In this case, therefore, the filter 6 is determined to be in an abnormal condition in step S107.

It is to be noted that, in the first example embodiment, the ECU 10 serves as "first diagnostic portion" by executing step S104 in the filter condition diagnostic procedure described above.

### (Modification Example)

Hereinafter, a diagnostic method for a filter according to a modification example of the first example embodiment will be described. When the filter 6 has been broken by being, for example, damaged or melted but it has not been completely broken, there may be a case where PM accumulates in the filter 6 during the forced recovery process non-execution period and the value detected by the differential pressure sensor 13 is on the increase. In such a case, however, the amount of PM accumulated in the filter 6 is smaller than that when the filter 6 is in a normal condition. Thus, even if the value detected by the differential pressure sensor 13 is on the increase, the rate of the increase is lower than that when the filter 6 is in a normal condition.

In view of the above, in this modification example, in a case where there is a differential pressure increase period within the forced recovery process non-execution period, the rate of increase in the value detected by the differential pressure sensor 13 and a reference increase rate are calculated. The rate of increase in the value detected by the differential pressure sensor 13 is calculated as the ratio of the amount by which the value detected by the differential pressure sensor 13 has increased during the differential pressure increase period to the amount by which the estimated value of the PM accumulated amount has increased during the same period. It is to be noted that this increase rate may alternatively be calculated as the amount by which the value detected by the differential pressure sensor 13 has increased per unit time during the differential pressure increase period. The reference increase rate is calculated as the rate at which the value detected by the differential pressure sensor 13 is estimated to increase during the differential pressure increase period on the assumption that the filter 6 is in a normal condition.

If the rate of increase in the value detected by the differential pressure sensor 13 is not within a predetermined allowable range from the reference increase rate, the filter 6 is determined to be in an abnormal condition. In this manner, it is possible to more reliably minimize the possibility that the filter 6 is erroneously determined to be in a normal condition despite the fact that the filter is actually in an abnormal condition.

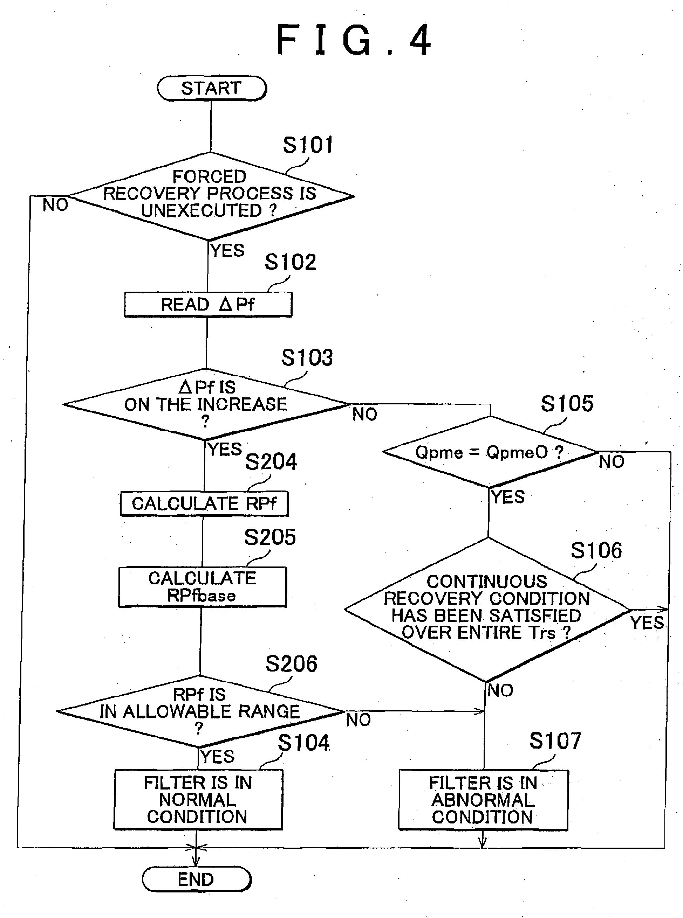

FIG 4 is a flowchart illustrating the procedure of the filter condition diagnosis according to the modification example. It is to be noted that this flowchart is formulated by adding steps S204 to S206 to the flowchart of FIG 3. Therefore, in the following, only the processes in steps S204 to S206 will be described and the descriptions on other steps will be omitted.

In this filter condition diagnostic procedure, if the result of the determination in step S103 is positive ("YES"), the process in step S204 is then executed. In step S204, an increase rate RPf representing the rate of increase in the value detected by the differential pressure sensor 13 during a differential pressure increase period is calculated.

Next, in step S205, a reference differential pressure increase rate RPfbase for the same differential pressure increase period is calculated. The reference differential pressure increase rate RPfbase is calculated based on, for example, the operation state of the internal combustion engine 1 during the differential pressure increase period. More specifically, for example, the amount of PM accumulated in the filter 6 is estimated, and the differential pressure across the filter 6 that corresponds to the estimated value of the PM accumulated amount is estimated by, for example, the method described in Japanese Patent Application Publication No. 2009-228487. Then, the rate of increase in the estimated value of the differential pressure across the filter 6 is calculated as the reference differential pressure increase rate RPfbase.

Next, in step S206, it is determined whether the increase rate RPf of the value detected by the differential pressure sensor 13 during the differential pressure increase period is within a predetermined allowable range from the reference differential pressure increase rate RPfbase. Note that the allowable range is, for example, empirically determined in advance.

If the result of the determination in step S206 is positive ("YES"), the filter 6 is determined to be in a normal condition in step S104. On the other hand, if the result of the determination in step S206 is negative ("NO"), the filter 6 is determined to be in an abnormal condition in step S107.

It is to be noted that, in this modification example, the ECU 10 serves as "increase rate calculation portion" by executing step S204 in the filter condition diagnostic procedure described above, serves as "reference increase rate calculation portion" by executing step S205 in the filter condition diagnostic procedure described above, and serves as "second diagnostic portion" by executing step S107 in the filter condition diagnostic procedure described above.

### <Second Example Embodiment>

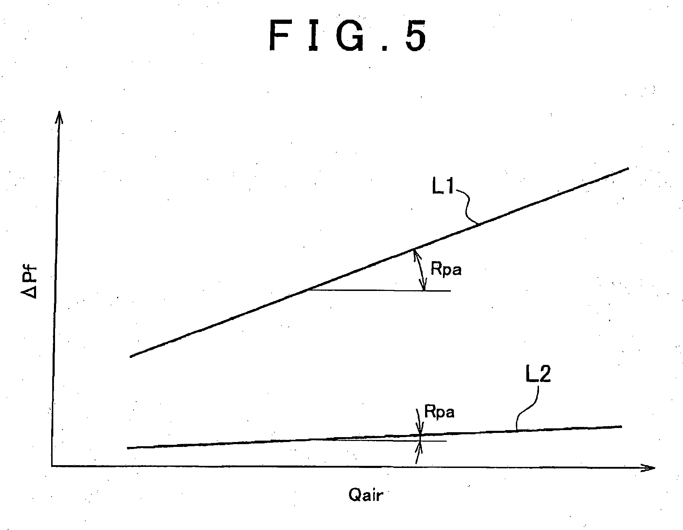

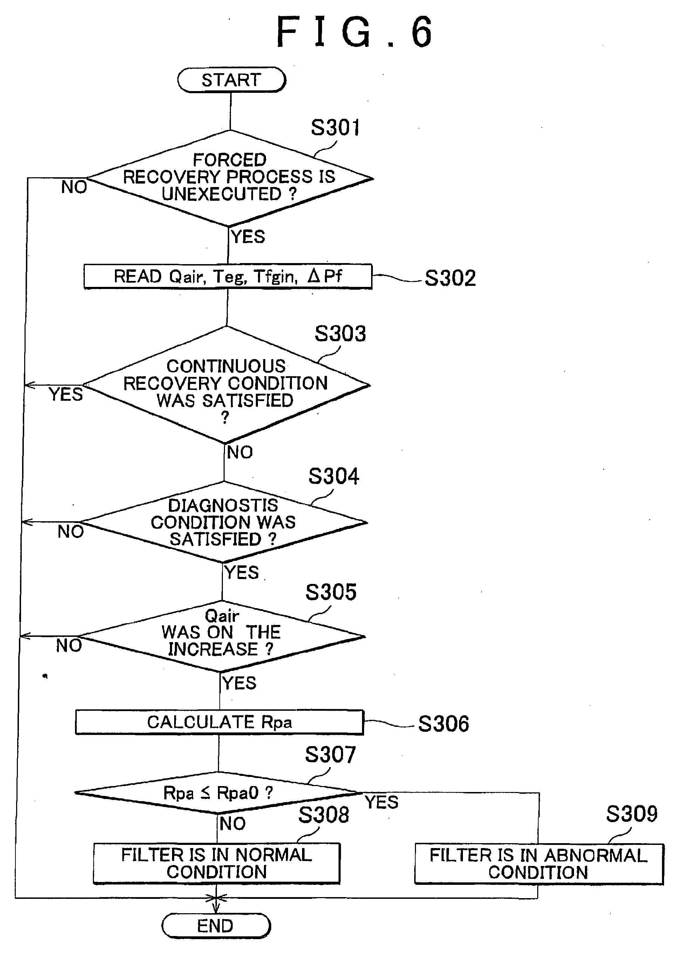

Hereinafter, a second example embodiment of the invention will be described with reference to FIGs. 5 and 6. In the following, only the differences from the first example embodiment will be described.

### (Filter Condition Diagnosis)

-Note that the diagnostic method in which whether the filter 6 is in a normal condition or in an abnormal condition is determined according to the first example embodiment will be referred to as "first diagnostic method" in the following description. In the second example embodiment, the condition of the filter 6 is diagnosed according to another diagnostic method in addition to the first diagnostic method. This diagnostic method will hereinafter be referred to as "second diagnostic method". The second diagnostic method according to the second example embodiment will be described below.

FIG. 5 is a graph illustrating the relation between the intake air amount Qair of the internal combustion engine 1 and the differential pressure ΔPf across the filter 6, which is established in a state where the forced recovery process is unexecuted and continuous recovery is not occurring. In FIG. 5, the abscissa axis represents the intake air amount Qair of the internal combustion engine 1, and the ordinate axis represents the differential pressure ΔPf across the filter 6. Further, in FIG. 5, the line L1 indicates the relation established when the filter 6 is in a normal condition, and the line L2 indicates the relation established when the filter 6 is completely broken.

As the intake air amount Qair of the internal combustion engine 1 increases, the exhaust gas flowrate increases. When the filter 6 is in a normal condition, the exhaust gas pressure on the upstream side of the filter 6 increases as the exhaust gas flowrate increases, if the forced recovery process is unexecuted and continuous recovery is not occurring. Therefore, as indicated by the line L1 in FIG. 5, the differential pressure across the filter 6 increases as the intake air amount Qair of the internal combustion engine 1 increases. On the other hand, as indicated by the line L2 in FIG. 5, in a case where the filter 6 is completely broken, the differential pressure across the filter 6 hardly changes even when the intake air amount Qair of the internal combustion engine 1 increases. Even if the differential pressure across the filter 6 increases as the intake air amount Qair of the internal combustion engine 1 increases, the amount of increase in the differential pressure across the filter 6 is much smaller than that when the filter 6 is in a normal condition.

In view of the above, in the second diagnostic method according to the second example embodiment, whether there is an intake air amount increase period where the amount of the intake air drawn into the internal combustion engine 1 is on the increase is determined when the forced recovery process is unexecuted and the condition where continuous recovery occurs is not satisfied. If there is an intake air amount increase period, a differential pressure gradient Rpa that represents the ratio of the amount of increase in the value detected by the differential pressure sensor 13 to the amount of increase in the intake air amount in the intake air amount increase period is calculated. Then, if the calculated differential pressure gradient Rpa is equal to or smaller than a predetermined value, the filter 6 is determined to be in an abnormal condition. The predetermined value is a threshold that is, for example, empirically set in advance and is used to determine whether the filter 6 is completely broken. That is, if the differential pressure gradient Rpa is equal to or smaller than this threshold, it is determined that the filter 6 is completely broken.

According to the second diagnostic method, it is possible to more reliably determine that the filter 6 is in an abnormal condition when the filter 6 is completely broken. Therefore, for example, even if the filter 6 is determined to be in a normal condition by the first diagnostic method despite the fact that the filter 6 is actually in an abnormal condition, the filter 6 is determined to be in the abnormal condition by the second diagnostic method. That is, with the second diagnostic method, it is possible to more reliably minimize the possibility that the filter 6 is erroneously determined to be in a normal condition despite the fact that the filter 6 is actually in an abnormal condition.

### (Filter Condition Diagnostic Procedure)

Hereinafter, the procedure of the second filter condition diagnosis according to the second example embodiment will be described with reference to the flowchart of FIG 6. It is to be noted that this procedure is stored in the ECU 10 in advance, and is repeatedly executed by the ECU 10 at given intervals.

In this procedure, first, whether the forced recovery process is presently unexecuted is determined in step S301. If it is determined in step S301 that the forced recovery process is presently unexecuted, the intake air amount Qair detected by the airflow meter 4, an intake air temperature Teg detected by the intake air temperature sensor 16, an exhaust gas temperature Tfgin detected by the upstream exhaust gas temperature sensor 14, and the value ΔPf detected by the differential pressure sensor 13 are read in step S302.

Subsequently, whether the continuous recovery condition was satisfied during a predetermined diagnostic period is determined in step S303. It is to be noted that the diagnostic period is set as a period for diagnosing the condition of the filter 6 using the second diagnostic method when the forced recovery process is unexecuted. In this filter condition diagnostic procedure, the process in step S303 is executed each time the diagnostic period elapses during the forced recovery process non-execution period. Whether the continuous recovery condition was satisfied in each diagnostic period is determined based on the temperature Tfgin and flowrate of the exhaust gas that flowed into the filter 6 during the diagnostic period. It is to be noted that, as in the first example embodiment, the exhaust gas flowrate is calculated based on the intake air amount detected by the airflow meter 4.

If the result of the determination in step S303 is positive ("YES"), the filter condition diagnostic procedure is finished briefly. On the other hand, if the result of the determination in step S303 is negative ("NO"), the process in step S304 is executed.

In step S304, it is determined whether a condition for executing the second diagnosis (i.e., the filter condition diagnosis according to the second diagnostic method) was satisfied during the diagnostic period in the present cycle. This diagnosis execution condition is a condition where, in a case where there is an intake air amount increase period, the differential pressure gradient in the intake air amount increase period is obviously different between when the filter 6 is in a normal condition and when the filter 6 is in an abnormal condition. More specifically, the diagnosis execution condition consists of the following three conditions; i) the amount of PM accumulated in the filter 6 is equal to or larger than a predetermined diagnosis execution accumulated amount, ii) the average of the intake air amount Qair of the internal combustion engine 1 in the diagnostic period is equal to or larger than a predetermined air amount, and iii) the intake air temperature Teg of the internal combustion engine 1 is within a predetermined intake air temperature range. Thus, the result of the determination in step S304 is positive ("YES") if these conditions are all satisfied. It is to be noted that the diagnosis execution condition is not limited to any of the conditions described above.

If the result of the determination in step S304 is negative ("NO"), the filter condition diagnostic procedure is finished briefly. On the other hand, if the result of the determination in step S304 is positive ("YES"), the process in step S305 is executed.

. In step S305, it is determined whether the intake air amount Qair of the internal combustion engine 1 was on the increase in the diagnostic period in the present cycle. In this step, more specifically, the intake air amount that was read for the first time in the diagnostic period in the present cycle is subtracted from the intake air amount that was read for the last time in the same diagnostic period. If the result of the subtraction is a positive value, it is determined that the intake air amount Qair was on the increase. If the result of the determination in step S305 is negative ("NO"), the filter conditions diagnostic procedure is finished briefly. On the other hand, if the result of the determination in step S305 is positive ("YES"), the process in step S306 is executed.

In step S306, the differential pressure gradient Rpa in the diagnostic period in the present cycle, that is, the intake air amount increase period in the present cycle, is calculated. In this step, more specifically, the differential pressure gradient Rpa is calculated by subtracting the value detected by the differential pressure sensor 13 that was read for the first time in the diagnostic period in the present cycle from the value detected by the differential pressure sensor 13 that was read for the last time in the same diagnostic period, and then dividing the result of subtraction by the amount of increase in the intake air amount Qair in the diagnostic period in the present cycle,

Next, it is determined in step S307 whether the differential pressure gradient Rpa is equal to or smaller than a predetermined value Rpa0. If the result of the determination in step S307 is negative ("NO"), the filter 6 is determined to be in a normal condition in step S308. On the other hand, if the result of the determination in step S307 is positive ("YES"), the filter 6 is determined to be in an abnormal condition in step S309.

It is to be noted that, in the second example embodiment, the airflow meter 4 serves as "intake air amount obtaining portion", and the ECU 10 serves as "continuous recovery determination portion" by executing step S303 in the filter condition diagnostic procedure described above, serves as "differential pressure gradient calculation portion" by executing step S306 in the filter condition diagnostic procedure described above, and serves as "third diagnostic portion" by executing step S309 in the filter condition diagnostic procedure described above.

When the filter 6 is removed from the exhaust passage 3, the differential pressure sensor 13 detects values like those detected when the filter 6 is completely broken. Therefore, such an abnormality is also detected by the filter condition diagnostic methods in the first and second example embodiments.

## Claims

1. A diagnostic apparatus that diagnoses a condition of a particulate filter (6) provided in an exhaust passage for an internal combustion engine, comprising:
an execution portion (10) that executes a forced recovery process that oxidizes, and
thereby removes particulate matter accumulated in the particulate filter by forcibly increasing a temperature of the particulate filter;
an intake air amount obtaining portion (4) that obtains an amount of intake air drawn into the internal combustion engine;
a differential pressure sensor (13) that detects a differential pressure across the particulate filter;
a diagnostic portion (10) that determines that the particulate filter is in an abnormal condition if a differential pressure gradient, that represents a ratio of an amount by which the value detected by the differential pressure sensor increases during the period where the intake air amount of the internal combustion engine is on the increase to an amount by which the intake air amount increases during the period where the intake air amount of the internal combustion engine is on the increase, is equal to or smaller than a predetermined value;
**characterized by** comprising:
a determination portion (10) that determines whether or not a condition where a continuous recovery, in which particulate matter accumulated in the particulate filter is oxidized due to an increase in an exhaust gas temperature, occurs is satisfied in the period where the forced recovery process by the execution portion is unexecuted;
a calculation portion (10) that calculates, if there is a period where the intake air amount of the internal combustion engine is on an increase when the forced recovery process by the execution portion is unexecuted and the determination portion determines that the condition where the continuous recovery occurs is not satisfied, the differential pressure gradient.

2. A diagnostic method for diagnosing a condition of a particulate filter (6) provided in an exhaust passage for an internal combustion engine, comprising:
executing a forced recovery process that oxidizes and thereby removes particulate matter accumulated in the particulate filter by forcibly increasing a temperature of the particulate filter;
obtaining an amount of intake air drawn into the internal combustion engine;
detecting a differential pressure across the particulate filter;
determining that the particulate filter is in an abnormal condition if a differential pressure gradient, that represents a ratio of an amount by which the value detected by the differential pressure sensor increases during the period where the intake air amount of the internal combustion engine is on the increase to an amount by which the intake air amount increases during the period where the intake air amount of the internal combustion engine is on the increase, is equal to or smaller than a predetermined value;
**characterized by** comprising:
determining whether a condition where a continuous recovery, in which particulate matter accumulated in the particulate filter is oxidized due to an increase in an exhaust gas temperature, occurs is satisfied in the period where the forced recovery process by the execution portion is unexecuted;
calculating, if there is a period where the intake air amount of the internal combustion engine is on an increase when the forced recovery process by the execution portion is unexecuted and the determination portion determines that the condition where the continuous recovery occurs is not satisfied, the differential pressure gradient.

## Patentansprüche

1. Diagnosevorrichtung, die einen Zustand eines Partikelfilters (6) diagnostiziert, der sich in einem Abgasstrang einer Verbrennungskraftmaschine befindet, aufweisend:
einen Ausführungsabschnitt (10), der einen zwangsweisen Erholungsvorgang ausführt, der Partikel, die sich in dem Partikelfilter angesammelt haben, oxidiert und dadurch entfernt, indem eine Temperatur des Partikelfilters zwangsweise erhöht wird;
einen Ansaugluftmengenerhaltungsabschnitt (4), der eine Menge an Ansaugluft erhält, die in die Verbrennungskraftmaschine eingesogen wird;
einen Differentialdrucksensor (13), der einen Differentialdruck über den Partikelfilter hinweg erfasst;
einen Diagnoseabschnitt (10) der feststellt, dass sich der Partikelfilter in einem Störzustand befindet, wenn ein Differentialdruck-Gradient, der ein Verhältnis einer Menge, um die der von dem Differentialdrucksensor erfasste Wert während der Zeitspanne ansteigt, in der die Ansaugluftmenge der Verbrennungskraftmaschine ansteigt, zu einer Menge, um die die Ansaugluftmenge während der Zeitspanne ansteigt, in der die Ansaugluftmenge der Verbrennungskraftmaschine ansteigt, darstellt, kleiner ist als ein vorgegebener Wert oder diesem gleicht;
**dadurch gekennzeichnet, dass** sie ferner Folgendes aufweist:
einen Feststellabschnitt (10), der feststellt, ob in dem Zeitraum, in dem der zwangsweise Erholungsvorgang durch den Ausführungsabschnitt nicht aufgerührt wird, eine Bedingung erfüllt ist, bei der eine kontinuierliche Erholung stattfindet, bei der die in dem Partikelfilter angesammelten Partikel aufgrund eines Anstiegs einer Abgastemperatur oxidieren;
einen Berechnungsabschnitt (10), der den Differentialdruck-Gradienten berechnet, falls es eine Zeitspanne gibt, in der die Ansaugluftmenge der Verbrennungskraftmaschine ansteigt, wenn der zwangsweise Erholungsvorgang durch den Ausführungsabschnitt nicht ausgeführt wird und der Feststellabschnitt feststellt, dass die Bedingung, bei der die kontinuierliche Erholung stattfindet, nicht erfüllt wird.

2. Diagnoseverfahren zum Diagnostizieren eines Zustands eines Partikelfilters (6), der sich in einem Abgasstrang einer Verbrennungskraftmaschine befindet, aufweisend:
Ausführen eines zwangsweisen Erholungsvorgangs, der in dem Partikelfilter angesammelte Partikel oxidiert und dadurch entfernt, indem eine Temperatur des Partikelfilters zwangsweise erhöht wird;
Erhalten einer Ansaugluftmenge, die in die Verbrennungskraftmaschine eingesogen wird;
Erfassen eines Differentialdrucks über den Partikelfilter hinweg;
Feststellen, dass sich der Partikelfilter in einem Störzustand befindet, wenn ein Differentialdruck-Gradient, der ein Verhältnis einer Menge, um die der von dem Differentialdrucksensor erfasste Wert während der Zeitspanne ansteigt, in der die Ansaugluftmenge der Verbrennungskraftmaschine ansteigt, zu einer Menge, um die die Ansaugluftmenge während der Zeitspanne ansteigt, in der die Ansaugluftmenge der Verbrennungskraftmaschine ansteigt, darstellt, kleiner ist als ein vorgegebener Wert oder diesem gleicht;
**dadurch gekennzeichnet, dass** es ferner Folgendes aufweist:
Feststellen, ob in dem Zeitraum, in dem der zwangsweise Erholungsvorgang durch den Ausführungsabschnitt nicht ausgeführt wird, eine Bedingung erfüllt ist, bei der eine kontinuierliche Erholung stattfindet, bei der die in dem Partikelfilter angesammelten Partikel aufgrund eines Anstiegs einer Abgastemperatur oxidieren;
Berechnen des Differentialdruck-Gradienten, falls es eine Zeitspanne gibt, in der die Ansaugluftmenge der Verbrennungskraftmaschine ansteigt, wenn der zwangsweise Erholungsvorgang durch den Ausführungsabschnitt nicht ausgeführt wird und der Feststellabschnitt feststellt, dass die Bedingung, bei der die kontinuierliche Erholung stattfindet, nicht erfüllt wird.

## Revendications

1. Appareil de diagnostic qui diagnostique un état d'un filtre à particules (6) fourni dans un passage de gaz d'échappement pour un moteur à combustion interne, comprenant :
une portion d'exécution (10) qui exécute un procédé de récupération forcée qui oxyde et élimine par là de la matière particulaire accumulée dans le filtre à particules en augmentant de manière forcée une température du filtre à particules ;
une portion d'obtention de quantité d'air d'entrée (4) qui obtient une quantité d'air d'entrée prélevée dans le moteur à combustion interne ;
un capteur de pression différentielle (13) qui détecte une pression différentielle à travers le filtre à particules ;
une portion de diagnostic (10) qui détermine que le filtre à particules est dans un état anormal si un gradient de pression différentielle, qui représente un rapport d'une quantité pour laquelle la valeur détectée par le capteur de pression différentielle augmente pendant la période où la quantité d'air d'entrée du moteur à combustion interne est en augmentation par rapport à une quantité pour laquelle la quantité d'air d'entrée augmente pendant la période où la quantité d'air d'entrée du moteur à combustion interne est en augmentation, est inférieur ou égal à une valeur prédéterminée ;
**caractérisé en ce qu'**il comprend :
une portion de détermination (10) qui détermine si un état, dans lequel il existe une récupération continue, dans laquelle de la matière particulaire accumulée dans le filtre à particules est oxydée en raison d'une augmentation de la température des gaz d'échappement, est satisfaisant ou non dans la période où le procédé de récupération forcée par la portion d'exécution n'est pas exécuté ;
une portion de calcul (10) qui calcule le gradient de pression différentielle, s'il existe une période où la quantité d'air d'entrée du moteur à combustion interne est en augmentation lorsque le procédé de récupération forcée par la portion d'exécution n'est pas exécuté et si la portion de détermination détermine que l'état, dans lequel la récupération continue existe, n'est pas satisfaisant.

2. Procédé de diagnostic pour diagnostiquer un état d'un filtre à particules (6) fourni dans un passage de gaz d'échappement pour un moteur à combustion interne, comprenant :
l'exécution d'un procédé de récupération forcée qui oxyde et élimine par-là de la matière particulaire accumulée dans le filtre à particules en augmentant de manière forcée une température du filtre à particules ;
l'obtention d'une quantité d'air d'entrée prélevée dans le moteur à combustion interne ;
la détection d'une pression différentielle à travers le filtre à particules ;
la détermination que le filtre à particules est dans un état anormal si un gradient de pression différentielle, qui représente un rapport d'une quantité pour laquelle la valeur détectée par le capteur de pression différentielle augmente pendant la période où la quantité d'air d'entrée du moteur à combustion interne est en augmentation par rapport à une quantité pour laquelle la quantité d'air d'entrée augmente pendant la période où la quantité d'air d'entrée du moteur à combustion interne est en augmentation, est inférieur ou égal à une valeur prédéterminée ;
**caractérisé en ce qu'**il comprend :
la détermination si un état, dans lequel il existe une récupération continue, dans laquelle de la matière particulaire est accumulée dans le filtre à particules est oxydée en raison d'une augmentation de la température des gaz d'échappement, est satisfaisant dans la période où le procédé de récupération forcée par la portion d'exécution n'est pas exécuté ;
le calcul du gradient de pression différentielle, s'il existe une période où la quantité d'air d'entrée du moteur à combustion interne est en augmentation lorsque le procédé de récupération forcée par la portion d'exécution n'est pas exécuté et si la portion de détermination détermine que l'état, dans lequel la récupération continue existe, n'est pas satisfaisant.
